(19) **Europäisches Patentamt / European Patent Office / Office européen des brevets**

(11) **EP 3 352 112 A1**

(12) **EUROPEAN PATENT APPLICATION**

(43) Date of publication:
**25.07.2018 Bulletin 2018/30**

(51) Int Cl.:
*G06K 9/46* (2006.01)   *G06K 9/62* (2006.01)

(21) Application number: **17152333.5**

(22) Date of filing: **20.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Technologies Oy**
**02610 Espoo (FI)**

(72) Inventor: **MILIORIS, Dimitrios**
**91620 Nozay (FR)**

(74) Representative: **Sayettat, Julien Christian et al**
**Strato-IP**
**63, Boulevard de Ménilmontant**
**75011 Paris (FR)**

(54) **ARCHITECTURE ADAPTED FOR RECOGNISING A CATEGORY OF AN ELEMENT FROM AT LEAST ONE IMAGE OF SAID ELEMENT**

(57) Architecture for recognising a category (CA, CA') of an element (E1, E2) from an image (I, 11, 12), comprising: a DCNN network (N, N1, N2) with k convolution layers ($C_k$, $C_1$-$C_5$) to detect a feature ($f_k$) in an image (I, 11, 12), comprising each $n_k$ kernels adapted to filter said feature ($f_k$), the first layer ($C_1$) filtering an input image (I, 11, 12) for producing $n_1$ feature maps ($F_1$) representing spatial locations of its feature ($f_1$), the following layers ($C_2$-$C_k$) filtering output feature maps ($F_1$-$Fk_{-1}$) of the preceding layer ($C_1$-$C_{k-1}$) for producing n2-nk feature maps ($F_2$-$F_k$); and a fully-connected layer (FC) for predicting a possible category (CA, CA'), the architecture further comprising a SVM machine (V) for classifying and furnishing the last feature maps ($F_5$, $F_k$) to the layer (FC) to improve the prediction accuracy with a lower computational complexity; means for establishing a confusion matrix to evaluate the pairs of categories (CA, CA') most often confused.

Fig. 1

EP 3 352 112 A1

**Description**

The invention relates to an architecture adapted for recognising a category of an element from at least one image of said element, said architecture comprising notably at least one Deep Convolutional Neural Network (DCNN), a process for recognising such a category by means of such an architecture, a computer program adapted to perform such a process and a computer readable storage medium comprising instructions to cause a data processing apparatus to carry out such a process.

It applies in particular to space recognition, i.e. the recognition of categories of elements that are geographical spaces, and more specifically to the recognition of outdoor spaces, such as landscapes or urban region, and/or of sub-categories thereof, such as streets, neighbourhoods or buildings.

In the field of space recognition using computer vision, there are basically two approaches: Metric SLAM (Simultaneous localization and mapping) based approach and appearance based approach.

The SLAM technique is a popular way to implement space recognition. It focusses on using various types of sensors to build a signal (ultrasonic, WiFi, geomagnetic, bluetooth) map for the target space, as explained in further details in the articles "DTAM: Dense Tracking And Mapping in real-time" (NEWCOMBE RA, LOVEGROVE SJ, DAVIDSON AJ, International Conference on Computer Vision, 2011) and "LSD-SLAM: Large-Scale Direct Monocular SLAM" (Jakob E, Thomas S, Daniel C, Lecture Notes in Computer Science, 2014, pp 834-849).

The resolution and accuracy is high. However, SLAM technique is computationally expensive due to the complexity 3-D reconstruction and it very much relies on the large hand-crafted feature database and efficient retrieval method.

Moreover, the FAB-MAP system, as presented in further details in the article "FAB-MAP: Probabilistic Localization and Mapping in the Space of Appearance" (M. CUMMINGS, P. NEWMAN, The International Journal Of Robotics Research, June 2008, pp 647-665), introduced a probabilistic approach to recognize places based on appearance information. It built a generative bag-of-words model to represent the discrete scene class.

For the particular case of outdoor spaces recognition, the article "UCL Depthmap 7: From Isovist Analysis to Generic Spatial Network Analysis" (A. TURNER, 2007) describes in details the space syntax theory, which is designed to evaluate a quantitative object networks by using graph theory. However, this solution mainly refers to the shaping of a map, and does not take into account the hidden structures of the geographical space.

The article "Cross-View Image Geolocalization" (T-Y LIN, S. BELONGIE, J. HAYS, IEEE Conference on Computer Vision and Pattern Recognition (CVPR), 2013) describes a solution based on geo-location of objects and satellite images trained on a Support Vector Machine (SVM) to distinguish between different geographical spaces. However, the main drawback of this solution relies on the non-existence of features and non-connection with the structure of the images of geographical spaces.

A DCNN network combines deep learning with convolutional neural networks, using millions of free parameters, which are optimized through an extensive training phase. Compared to the hand-crafted features, a DCNN network combines a powerful ability in feature learning and deep feature extraction, which has been tested to learn the best spatial features automatically, which will be robust and relatively universal to various context, as described especially in articles "A Deep Convolutional Activation Feature for Generic Visual Recognition" (J. DONAHUE, Y. JIA, O. VINYALS, J. HOFFMAN, N. ZHANG, E. TZENG, T. DARRELL, Proceedings of the 31st International Conference on Machine Learning, 2014, pp.647-655) and "Learning and Transferring Mid-Level Image Representations Using Convolutional Neural Networks" (M. OQUAB, L. BOTTOU, I. LAPTEV, J. SIVIC, IEEE Conference on Computer Vision and Pattern Recognition, 2014).

DCNN networks have achieved outstanding success in object and scene recognition. Actually, the task to recognize object and scene have a lot in common, which are distinguished from each other based on their inherent physical structure and color pattern. However, how good the ability of DCNN networks to interpret and recognize a segment of space requires more research.

A DCNN network interprets space based on visual elements, somehow incorporating the human ability of spatial navigation using visual tips. In the article "Deep Networks Can Resemble Human Feed-Forward Vision in Invariant Object Recognition" (S. R. KHERADPISHEH, M. GHODRATI, M. GANJTABESH, T. MASQUELIER, 2016), eight state-of-the-art DCNN networks were testes with 2D and 3D images, and their respective object recognition rates were compared with humans. Based on this important result, which potentially built a connection between DCNN networks and human cognition, it is also a promising way to understand how humans recognize the complex indoor/outdoor space, by analyzing the spatial features that DCNN networks learned. Results were promising, showing that DCNN networks achieved high human-level accuracy when objects are placed against uniform gray backgrounds. However, all those images are outdoors with clearly defined objects outstanding from the background.

Thus, there is a new research trend on using DCNN models to recognize places. Compared with traditional method using images for space recognition, deep learning has great advantage at feature learning, which have been proved feasible and effective than hand-crafted features. The importance of Deep Convolutional Neural Network in support of visual recognition tasks has been well recognized with impressive performance, as explained in the articles "ImageNet Classification with Deep Convolutional Neural Networks" (A. KRIZHEVSKY, I. SUTSKEVER, GE. HINTON, Advances in Neural Information Processing Systems 25, 2012, pp 1097-1105) and "Visualizing and Understanding Convolutional Networks" (M. ZEILER, R. FERGUS, 2013).

The article "Deep Neural Network for Real-Time Autonomous Indoor Navigation" (DK KIM, T CHEN, Cornell University, November 2015) teaches the training of a DCNN model to learn a control strategy, in order to navigate robot in indoor scenario.

The article "Door Recognition and Deep Learning Algorithm for Visual Based Robot Navigation" (W CHEN, C WEI, Q TING, Z YIMIN, W KAIJAN, W GANG, IEEE International Conference on Robotics and Biomimetics (ROBIO) 2014) describes a DCNN model which is also used for robot indoor navigation. Differently, the model focus on detecting doors and predicting door's pose.

The article "PoseNet: A Convolutional Network for Real-Time 6-DOF Camera Relocalization" (A KENDALL, M GRIMES, R CIPOLLA, IEEE International Conference on Computer Vision (ICCV) 2015) describes a system which combines the strengths of SLAM and DCNN models. More precisely, they trained a neural network to regress the camera pose from single image, which achieved high resolution and accuracy.

The article "On the Performance of ConvNet Features for Place Recognition" (N SUNDERHAUF, F DAYOUB, S SHIRAZI, B UPCROFT, M MILFORD, IEEE/RSJ International Conference on Intelligent Robots and Systems (IROS) 2015) describes experimentations that investigated on the utility of DCNN model features for place recognition, and also evaluates the performance of different level of feature maps to recognize places under severe appearance changes, giving insights into DCNN model's ability to interpret and understand spaces.

The invention aims to improve the prior art by proposing an architecture with a DCNN network that is arranged to make better category predictions, especially in the recognition of geographical spaces, and more particularly outdoor spaces, and thus while reducing the computational complexity and increasing the accuracy of said predictions.

For that purpose, and according to a first aspect, the invention relates to an architecture adapted for recognising a category of an element from at least one image of said element, said architecture comprising:

- at least one Deep Convolutional Neural Network (DCNN) comprising at least:

  ○ k consecutive convolution layers (k being a natural number at least equal to 1), each of said convolution layers being adapted to detect at least a feature in an image of the element, and comprising each a number $n_k$ of kernels that are each adapted to filter said a least one feature in said image, the first convolution layer being adapted to filter an input image of said element for producing $n_1$ feature maps representing spatial locations of its corresponding feature in said input image, the following convolution layers being adapted to filter output feature maps of the preceding convolution layer for producing $n_2$-$n_k$ feature maps representing spatial locations of their corresponding feature in said output feature maps;

  ○ a fully-connected layer comprising means for predicting a possible category of the element from the $n_k$, $n_5$ output feature maps of the last convolution layer;

- at least one Support Vector Machine (SVM) comprising means for processing the $n_k$, $n_5$ output feature maps of the last convolution layer to classify said feature maps, and means to furnish said classified feature maps to the fully-connected layer, so as to improve the accuracy of the prediction of the possible category with a lower computational complexity;

- means for comparing the predicted possible category with the real category of said element;

- means for establishing, from the results of said comparison, a confusion matrix for recapitulating the confusions of categories made by the DCNN network, so as to evaluate the pairs of categories that are most often confused by said DCNN network.

According to a second aspect, the invention relates to a process for recognizing a category of an element from at least one image of said element, said process providing for:

- providing said image to an architecture comprising:

  ○ at least one Deep Convolutional Neural Network (DCNN) comprising at least:

    ■ k consecutive convolution layers (k being a natural number at least equal to 1), each of said convolution layers being adapted to detect at least a feature in an image of the element, and comprising each a number $n_k$ of kernels that are each adapted to filter said a least one feature in said image, the first convolution layer being adapted to filter an input image of said element for producing $n_1$ feature maps representing spatial locations of its corresponding feature in said input image, the following convolution layers being adapted to filter output feature maps of the preceding convolution layer for producing $n_2$-$n_k$ feature maps representing spatial locations of their corresponding feature in said output feature maps;

▪ a fully-connected layer comprising means for predicting a possible category of the element from the $n_k$, $n_5$ output feature maps of the last convolution layer;

∘ at least one Support Vector Machine (SVM) comprising means for processing the $n_k$, $n_5$ output feature maps of the last convolution layer to classify said feature maps, and means to furnish said classified feature maps to the fully-connected layer, so as to improve the accuracy of the prediction of the possible category with a lower computational complexity;

- comparing the category predicted by said architecture for the element with the real category of said element;
- from the results of said comparison, establishing a confusion matrix for recapitulating the confusions of categories made by the DCNN network, so as to evaluate the pairs of categories that are most often confused by said DCNN network.

According to an embodiment, the elements to be recognized are outdoor geographical spaces.

According to another embodiment, the process provides for previously training the DCNN network to recognize the categories of several elements by providing to said DCNN network a video file comprising images of said elements.

According to another embodiment, the image comprises a first element and a second element which is a part of said first element, the process providing for using an architecture which is adapted to recognize the category of the second element by means of:

- a first DCNN network for predicting a possible first category for the first element;
- a second DCNN network, for predicting a possible second category for the second element, the second category corresponding to a sub-category of the first category;

the first DCNN network being adapted to communicate the predicted first category to the second DCNN network and the second DCNN network being adapted to use said predicted first category to predict the second category.

In particular, the process provides for training the first and second DCNN networks in parallel to recognize respectively categories of a first group of elements and categories of a second group of elements that are each a part of an element from the first group, thus by providing in parallel to said first DCNN network a first video file comprising images of the first group of elements, and to said second DCNN network a second video file comprising images of said second group of elements.

In particular, the first video file and the second video file are extracted from a raw video file, the first video file comprising low spatial resolution images of said raw video file and the second media file comprising high-spatial resolution images of said raw video file.

According to another embodiment, the process provides for previously estimating and saving the real category of the element, so as to compare the predicted category with said estimated and saved real category.

According to another embodiment, the process provides for establishing the confusion matrix by calculating each cell $C_{i,j}$ of said matrix according to the following formula:

$$C_{i,j}=n_{i,j}/n_j$$

wherein $n_{i,j}$ is the number of images with real category j for which a category i was wrongly predicted and $n_j$ is the total number of images with said real category j that was processed by the DCNN network.

According to another embodiment, the process provides for studying the behavior of the DCNN network by means of a Class Activation Mapping (CAM) function, which provides for calculating, from the $n_k$, $n_5$ feature maps $F_5$, $F_k$ provided by the last convolution layer and the categories predicted by the fully-connected layer, a class map $M_{CA}$ according to the following formula:

$$M_{CA}(x,\ y)=\Sigma(k)k^*\omega_{CA}^*F_k(x,\ y)$$

wherein x,y are spatial grids and $\omega_{CA}$ the weight of the predicted category furnished by the fully-connected layer, so as to identify the features of the images of an element which are detected in priority by the DCNN network for predicting the category of said element.

According to a third aspect, the invention relates to computer program adapted to perform such a process.

According to a fourth aspect, the invention relates to a computer readable storage medium comprising instructions to cause a data processing apparatus to carry out such a process.

Other aspects and advantages of the invention will become apparent in the following description made with reference to the appended figures, wherein:

- figure 1 represents schematically the steps performed by an architecture according to the invention for predicting a possible category for an element from an input image of said element;
- figures 2a and 2b represent schematically the step of production of a feature map from a feature extracted from an input image respectively by a Generalized Linear Model (GLM) convolution layer (figure 2a) and by a Multi-Layer Perceptron (MLP) convolution layer (figure 2b);

- figure 3 represents schematically in parallel feature maps produced by two different convolution layers from a raw image of an element to be categorized;
- figure 4 represents schematically the different steps of a process implemented by an architecture according to the invention;
- figure 5 represents schematically an example of a confusion matrix that can be established by an architecture according to the invention.

In relation to those figures, we describe below an architecture adapted for recognising a category CA of an element E1, E2 from at least one image I of said element, as well as a process for recognising such a category by means of such an architecture.

In particular, the architecture is adapted for space recognition, i.e. the recognition of categories CA of elements E1, E2 that are geographical spaces, and more specifically to the recognition of outdoor spaces, such as landscapes or urban regions, and/or of sub-categories thereof, such as streets, neighbourhoods or buildings, the process further providing for configuring architecture for recognising a category CA of such geographical spaces.

The architecture comprises at least one Deep Convolutional Neural Network (DCNN) N, which comprises k consecutive convolution layers $C_k$, k being a natural number at least equal to 1, each of said convolution layers being adapted to detect at least a feature $f_k$ in an image I of the element E1, E2.

The feature $f_k$ can be for example relative to particular patterns within the image I, such as color patterns and/or shape patterns. Moreover, a convolution layer $C_k$ can be adapted to detect several features $f_k$, $f'_k$ in an image I of the element E1, E2, and may comprise to do so several slices of neurons NE which are superimposed through the depth of said convolution layer, each of said slices being adapted to detect respectively one of the several feature $f_k$, $f'_k$.

To detect the at least one feature $f_k$, each convolution layer $C_k$ comprises a number $n_k$ of kernels KE ($n_k$ being a natural number at least equal to 1) that are each adapted to filter said at least one feature in the image I.

In the case of a convolution layer $C_k$ comprising several slices of neurons NE for detecting several features $f_k$, $f'_k$ in an image I, each kernel KE comprises one neuron NE of each of said slices, said neurons being aligned along the depth of the kernel KE, said depth being equal to the depth of the convolution layer $C_k$.

By means of their respective kernels KE, the first convolution layer $C_1$ is adapted to filter an input image I of the element E1, E2 to be categorized for producing $n_1$ feature maps $F_1$ representing spatial locations of its corresponding feature $f_1$ in said input image, the following convolution layers $C_2$-$C_k$ being adapted to filter output feature maps $F_1$-$Fk_{-1}$ of the preceding convolution layer $C_1$-$C_{k-1}$ for producing $n2$-$nk$ feature maps $F_2$-$F_k$ repre-

senting spatial locations of their corresponding feature $f_2$-$f_k$ in said output feature maps.

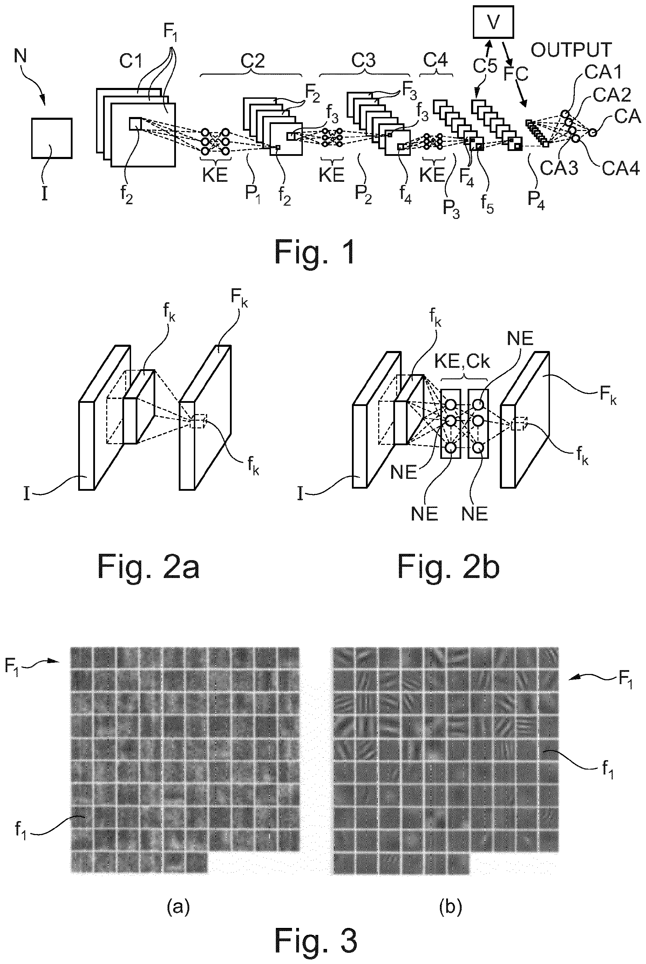

According to the category CA of the element E1, E2, the feature(s) $f_k$ to be detected by convolution layers $C_k$ can vary. For example, figure 3 represents in parallel feature maps $F_1$ produced by the respective first convolution layers $C_1$ of two different DCNN networks from a raw image of an element E1, E2 to be categorized, part (a) showing the first feature map $F_1$ for a DCNN network trained to space recognition, i.e. categorisation of geographical spaces, whereas part (b) shows the first feature map $F_1$ for a DCNN network trained to a more general classification task, such as for example an ImageNet® classification task, which is to classify 1000 categories of objects and scenes.

In particular, for a more general classification task, such as for example an object-detection oriented task as the ImageNet® classification task, the DCNN network will be adapted to detect a broad range of features $f_k$, and then will implement several kinds of frequency, orientation and color sensitive kernels KE, because a same object of a same category CA may exist invariant in shape, but with different orientations and/or frequencies.

On the contrary, for a geographical space classification task, the DCNN network will be adapted to detect very specific features $f_k$, which can for example focus mostly on color patterns. In particular, for such a recognition task, the filtering of kernels will not be based on single objects, scenes, or even fixed spatial shapes, and then will not be sensitive to frequencies or orientations. Indeed, by analogy with space recognition performed by humans, geographical places are generally recognized based on holistic perception, which combines the colors and patterns of decoration and patterns of spatial features, which is quite different from a single object recognition.

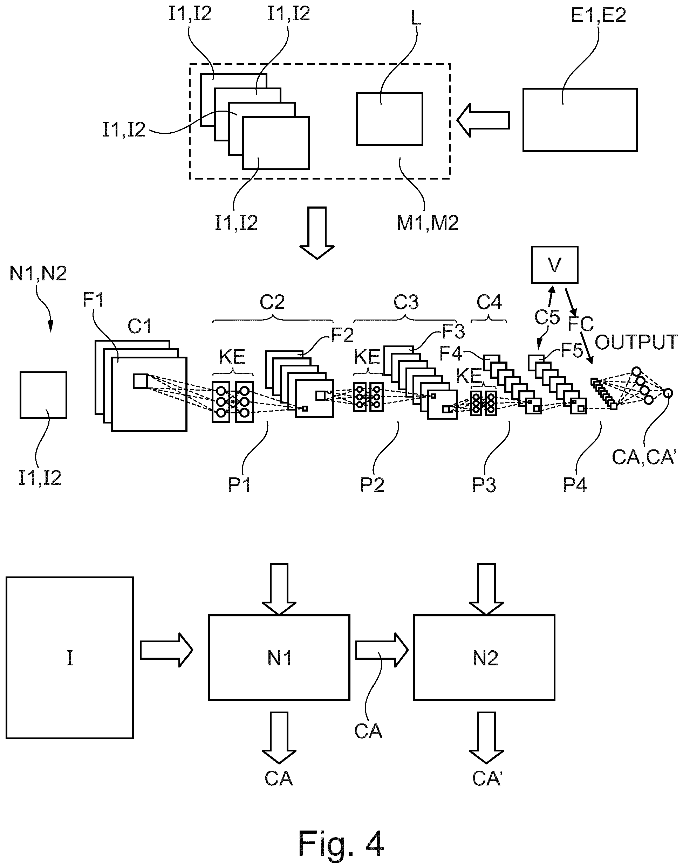

In relation to figures 1 and 4, the DCNN network comprises in particular five consecutive convolution layers $C_1$-$C_5$. The input image I can be for example with a format of 227x227x3, i.e. an image with 227 pixels of width, 227 pixels of high and 3 color channels. The input image I can be an image captured by means of a device with adapted capturing means, such as for example the integrated camera of a portable phone, or a captured image from an aerial view, such as for example an image from Google Street View®.

In particular, the first convolution layer $C_1$ may comprise 96 kernels, each of side 11x11 and adapted to browse the input image I with a stride of 4, so as to produce 96 feature maps $F_1$. Similarly, the following convolution layers C2-C4 comprise respectively 256, 384, 512 kernels, so as to produce respectively 256, 384, 512 feature maps $F_2$-$F_4$ from the feature map $F_1$-$F_3$ output from the preceding convolution layer $C_1$-$C_3$.

Advantageously, notably for recognition of outdoor spaces, the last convolution layer C5, i.e. the fifth one in the present example, is adapted to filter the $n_4$

output feature maps $F_4$ of the preceding fourth convolution layer $C_4$ for producing 200 feature maps $F_5$ highlighting the most important features $f_1$-$f_5$ of the image I. In particular, the architecture can comprise means for implementing an image segmentation to emphasize the highlighting of the most important features $f_1$-$f_5$.

The DCNN network N can notably comprise at least three Multi-Layer Perceptron (MLP) convolution layers, and especially the three first convolution layers $C_1$-$C_3$ may be such MLP convolution layers.

As represented schematically on figures 2a and 2b, the filtering processes performed respectively by a MLP convolution layer (figure 2b) and by a classic convolution layer, such as for example a Generalized Linear Model (GLM) convolution layer (figure 2a), are quite different, and thus provide different results.

As described in further details in the article "Network In Network" (M. Lin, Q. Chen, S. Yan), a GLM convolution layer consists in neurons NE with linear activation functions, so that its ability of abstraction is believed limited in high-level recognition tasks. On the contrary, a MLP convolution layer consists in several superimposed slices of neurons NE that are fully connected, especially with neurons NE of adjacent slices, with non-linear activation functions, which allows such a MLP convolution layer to detect non-linear features, which are generally more complex. In particular, considering the potential of non-linear features in outdoor geographical spaces, such an MLP convolution layer is well adapted for configuring a DCNN network for recognition of such outdoor geographical spaces.

In relation to figures 1 and 4, as the three first convolution layers $C_1$-$C_3$ are MLP convolution layers, the last two convolution layers $C_4$, $C_5$ can be classic convolution layers, such as for example GLM convolution layers.

To avoid overfitting of the DCNN network N, the DCNN network N can comprise at least one pooling layer P1-P4 inserted at the output of a convolution layer $C_k$ for managing dimensions of the output feature maps $F_k$ of said convolution layer, which allows to reduce the quantity of information to be processed by the consecutive layer, and then to avoid overfitting of said consecutive layer.

In relation to figures 1 and 4, the DCNN network N comprises notably three pooling layers P1-P3 that are inserted respectively at the output of the first, second and third convolution layers $C_1$-$C_3$. In particular, the first pooling layer P1 can perform on the 96 feature maps $F_1$ a max pooling function with a 3x3 filter and a stride of 2, to give said 96 feature maps $F_1$ with a size of 55x55. Similarly, the second P2 and third P3 pooling layers can perform on their respective output feature maps $F_2$, $F_3$ a max pooling function with a 3x3 filter, the stride of said filter being of 2 for the second pooling layer P2 and of 1 for the third pooling layer P3, to give respectively the 256 features maps $F_2$ with a size of 27x27 and the 384 feature maps $F_3$ with a size of 13x13.

Moreover, the last two convolution layers $C_4$, $C_5$ are adapted to produce respectively 512 feature maps $F_4$ with a size of 11x11 and 200 feature maps $F_5$, eventually with a pooling layer implemented at their respective outputs.

The DCNN network N further comprises a fully-connected layer FC which comprises means for predicting a possible category CA of the element E1, E2 represented on the input image I from the $n_k$, $n_5$ output feature maps of the last convolution layer $C_5$, $C_k$.

Moreover, the architecture comprises at least one Support Vector Machine V which comprises means for processing the $n_5$ output feature maps $F_5$ of the last convolution layer $C_5$ to classify them, and means to furnish said classified feature maps to the fully connected layer FC, so as to improve the accuracy of the prediction of the possible category CA with a lower computational complexity.

To do so, the SVM machine V can comprise means for implementing a radial kernel to process the $n_5$ output feature maps $F_5$ of the last convolution layer $C_5$, such a function providing better results in the case of outdoor spaces recognition, notably in comparison to other known techniques used by such SVM machines, such as for example linear or polynomial kernels.

In a known manner, kernels are functions used by a SVM machine V to map pairwise vectors X, Y of an input space, i.e. features maps $F_5$, $F_k$ at the output of the fifth convolution layer $C_5$ in the present case, so as to classify them in clusters according to their similarities, said clusters being separated by a margin.

In particular, the Radial Basis Function Kernel (RBF) uses the following formula:

$$K_{RBF}(X, Y) = \exp(-\gamma \| X-Y \|^2)$$

wherein $\gamma$ is a parameter proper to the kernel which is always strictly greater to 0, and which is automatically chosen to optimize the margin between the classification clusters of feature maps $F_5$, $F_k$. For example, for good results with Google Street® images, the more the value of $\gamma$ is high, the less the margin between the clusters is, which give better results.

Moreover, the performances of SVM machines V are generally dependent from a global parameter c, which is chosen by the operator and which trades off misclassifications of said SVM machines V against simplicity of the decision surface. Thus, for optimized results, the c parameter must be chosen wisely by the operator, eventually through a training of the SVM machine V.

In particular, the DCNN network N can comprise a pooling layer P4 which is inserted between the last convolution layer $C_5$, $C_k$ and the fully-connected layer FC and which is arranged to perform a global average pooling (GAP) procedure on feature maps $F_5$, $F_k$ provided by the last convolution layer $C_5$, $C_k$ to avoid overfitting of the fully-connected layer FC by reducing the quantity of information to be processed by the said fully-connected layer.

Indeed, as explained in further details in the article "Network In Network" mentioned hereinabove, the GAP procedure acts as a structural regularizer, and is less prone to overfitting when compared to fully-connected layers working without such a procedure.

In particular, this fourth pooling layer P4 can perform such a GAP procedure with a 11x11 filter and a stride of 11, so as to obtain 200 feature maps $F_5$ with a size of 11x11.

To help avoiding the overfitting of the DCNN network N, said DCNN network can implement other functions, such as for example a dropout function for randomly deactivating a part of the kernels KE of at least one layer $C_1$-$C_5$, FC, and more particularly half of the kernels KE of a same layer $C_1$-$C_5$, FC, which not only reduces considerably overfitting, but also improves the generalization ability of the DCNN network N to a large extend. In particular, such a function can be preferably implemented after the first two pooling layers P1, P2. This function is notably described in further details in the article "ImageNet Classification with Deep Convolutional Neural Networks" mentioned hereinabove.

To improve the accuracy of the DCNN network N and to improve its generalization ability, said DCNN network can further implement at least one Local Response Normalization (LRN) layer for performing a normalization around the local neighborhood of the unbounded activated neurons NE of at least one layer $C_1$-$C_5$, $C_k$, FC. As described notably in the article "ImageNet Classification with Deep Convolutional Neural Networks" mentioned hereinabove and in the article "Nonlinear Image Representation Using Divisive Normalization" (S. Lyu, E.P. SIMONCELLI, IEEE Conference on Computer Vision and Pattern Recognition, Anchorage, Alaska, June 24-26, 2008), such a LRN layer performs a sort of lateral inhibition by normalizing over local input regions of a layer $C_1$-$C_5$, FC, which has been proven to be effective when dealing with Rectified Linear Unit (RELU) layers.

Other studies about the problems of avoiding overfitting and enhancing the generalization capability of DCNN networks are available, for example upon reading the article "Improving Neural Networks by Preventing Co-Adaptation of Feature Detectors" (G. E. HINTON, N. SRIVASTAVA, A. KRIZHEVSKY, I. SUTSKEVER, R. SALAKHUTDINOV, 2012).

For predicting a possible category CA of the element E1, E2, the fully-connected layer FC can be implemented with a m-way softmax function comprising m predetermined possible categories CA1, CA2, CA3, CA4 (m being a natural number at least equal to 2), as well as with means for attributing a score to each of said predetermined categories, and means for predicting the possible category CA of the element E1, E2 upon selection of the predetermined category CA1, CA2, CA3, CA4 with the highest score.

In particular, this function can be implemented with 35 predetermined possible categories CA1, CA2, CA3, CA4, but this number can vary easily, especially according to the type of elements E1, E2 to be categorized.

For a more precised category prediction, when the image I comprises a first element E1 and a second element E2 which is a part of said first element, the architecture can be adapted to recognize the category CA' of the second element E2 by means of:

- a first DCNN network N1 for predicting a possible first category CA for the first element E1;
- a second DCNN network N2 for predicting a possible second category CA' for the second element E2, the second category CA' corresponding to a sub-category of the first category CA.

For example, in the case of outdoor space recognition, the first element E1 can be a broad outdoor geographical space, such as for example a large urban place as a town or an agglomeration, and the second element E2 can be a street, a neighbourhood or a particular building of said broad space.

Moreover, the first DCNN network N1 can be adapted to communicate the predicated first category CA to the second DCNN network N2, while the second DCNN network N2 can be adapted to use said predicted first category to predict the second category CA'.

To facilitate the recognition of the sub-category CA' by the second DCNN network N2, the architecture can comprise means for processing the image I, notably for increasing its spatial resolution, before providing said image to said second DCNN network.

Now, we describe herein below a process for recognizing, by means of such an architecture, a category CA, CA' of an element E1, E2 from at least one image I of said element.

This process can notably be performed by means of an adapted computer program, or by means of a computer readable storage medium comprising instructions to cause a data processing apparatus to carry out said process.

In particular, the element is a geographical space, especially an outdoor space, such as a landscape or an urban space, the process providing for configuring the architecture for recognizing a category of such geographical space.

In relation to the upper part of figure 4, the process provides for previously training the DCNN network N, N1, N2 to recognize the categories CA, CA' of several elements E1, E2 by providing to said DCNN network a video file M1, M2 comprising images I1, I2 of said elements.

The video file M1, M2 can be notably a video file comprising a scrolling sequence of images I1, I2, said images being captured by means of an appropriate terminal, for example a mobile phone with a camera, or captured images from an aerial view, such as for example an image from Google Street View®.

To do so, the architecture can comprise means for performing such a previous training, said means comprising notably:

- means for providing a video file M1, M2 comprising images I1, I2 of several elements E1, E2, said means being for example adapted to allow a human operator to load such a video file M1, M2 through a dedicated interface of said architecture;
- means for providing said video file to said architecture to train the DCNN network N, N1, N2 of said architecture.

In the case of an outdoor geographical space, such as for example a town, the video file can comprise images I1, I2 of elements E1, E2 such as streets, neighborhoods, parks or buildings of said town, the DCNN network N1, N2 being then configured to recognize these different elements E1, E2, for example for allowing visitors of said town to localize their current position easily in said town.

Advantageously, as explained hereinabove, the process can provide to use an architecture configured according to a multi-scale recognition model, i.e. an architecture comprising a first N1 and a second N2 DCNN networks adapted to recognize respectively a first broad category CA and one of its sub-categories CA'. Indeed, such a multi-scale recognition model allows to improve the spatial resolution and accuracy, and gives particularly good feedback in the field of outdoor spaces recognition.

In particular, the process can provide for training in parallel the first DCNN network N1 and the second DCNN network N2 of such an architecture, the first DCNN network N1 being focused on recognition of broad zones of an outdoor geographical space, for example a town, while the second DCNN network N2 is focused on recognition of sub-zones of said broad zones, for example streets, parks, neighborhoods or buildings.

The process can provide in parallel to the first DCNN network N1 a first video file M1 comprising images of a first group of elements E1, which correspond notably to broad zones of a building, and to the second DCNN network a second video file M2 comprising images of a second group of elements E2 that are each a part of an element E1 from the first group, which correspond notably to particular rooms and/or corridors of the floors and/or departments of the first video file M1.

To do so, the architecture can comprise means adapted to train the first N1 and second N2 DCNN networks in parallel, said means being adapted to provide in parallel to said first DCNN network such a first video file M1 and to said second DCNN networks such a second video file M2.

The first video file M1 and the second video file M2 can notably be extracted from a raw video file, for example captured by an operator during a flying above the town, before the training phase of the DCNN networks N1, N2. The first video file M1 can notably comprise low-spatial resolution images I1 of the raw video file, which are generally sufficient to recognize broad zones of a town, whereas the second video file M2 comprises high-spatial resolution images I2 of said raw video file, which are more efficient to correctly recognize specific sub-zones of said town. To do so, the architecture can comprise means for performing such a video extraction, notably upon the loading of such a raw video file by a human operator.

To do so, the raw video file can be pre-processed to attribute to each image I1, I2 a label L corresponding to its spatial resolution, the first M1 and second M2 video files being further created upon extraction of said images according to said labels L.

In relation to the lower part of figure 4, once the DCNN networks N1, N2 have been trained, the process can use the architecture to recognize a category CA, CA' of at least one element E1, E2 present in the training video file(s) M1, M2, thus by providing at first to the architecture at least one image I of one of these elements E1, E2, so that the architecture predicts a possible category CA, CA' of said element as described above, i.e. by means of said DCNN networks, , the accuracy of the prediction of said possible category being improved by the SVM machine V.

In particular, the following steps can be performed during the configuration of the architecture, notably during a test phase of said architecture before rendering it available to an audience, or during a service phase wherein said architecture is used by said audience.

The architecture comprises means for performing such a test/service phase, for testing the architecture during a configuration process performed by an operator or during a using of said architecture by the audience, said means comprising:

- means for providing an image I of at least one of the elements E1, E2 of the training video file M1, M2, said means being for example adapted to allow a human operator or a user to load such a video file M1, M2 through a dedicated interface of said architecture;
- means for providing the trained DCNN network N, N1, N2 with said image, so that said DCNN network predicts a possible category CA, CA' for said element, the accuracy of the prediction of said possible category being improved by the SVM machine V.

As represented on the lower part of figure 4, the process provides to the first DCNN network N1 an image I of a pair of elements E1, E2 comprising an element E1 of the first group, for example a town, and of one of its part elements E2 from the second group, for example a street of said town, so that the first DCNN network N1 predicts a first category CA for the first element E1 and the second DCNN network N2 predicts for the second element E2 a second category CA' corresponding to a sub-category of said first category, the first DCNN network N1 communicating to the second DCNN network N2 said predicted first category to help for the prediction of the sub-category CA'.

To evaluate the accuracy of the recognition performed by the DCNN network N1, N2, notably in view to correct its eventual deficiencies, the process provides, for each image I to be provided to the DCNN network N1, N2, for comparing the predicted category CA, CA' for the element E1, E2 with the real category of said element.

Then, from the results of said comparison, especially after several tests or service phases performed by providing several images I to the DCNN network N1, N2, the process provides for establishing a confusion matrix for recapitulating the confusions of categories made by said DCNN network, so as to evaluate the pairs of categories i, j that are most often confused by said DCNN network.

To do so, the architecture can comprise:

- means for comparing the possible category CA, CA' predicted by the DCNN network N, N1, N2 with the real category of said element;
- means for establishing such a confusion matrix from the results of said comparison.

In particular, the process, as well as the means for establishing the confusion matrix of the architecture, can provide to calculate each cell $C_{i,j}$ of the matrix according to the following formula:

$$C_{i,j}=n_{i,j}/n_j$$

wherein $n_{i,j}$ is the number of images I with real category j for which a category i was wrongly predicted and $n_j$ is the total number of images I with said real category j that was processed by the DCNN network N1, N2.

In particular, the process can provide, for each image I to be provided to the DCNN network N1, N2, for previously estimating and saving the real category CA, CA' of the concerned element E1, E2, and then, once said DCNN network has predicted a possible category CA, CA' for said element, for comparing the predicted category CA, CA' with said estimated and saved real category.

To do so, the architecture can comprise means for estimating and saving the real category of the element E1, E2 represented on the provided image I, the comparing means of said architecture being adapted to compare the predicted category CA, CA' with said estimated and saved real category.

In particular, the predicted categories CA, CA' can be stored along with the corresponding estimated real categories during the test/service phase, and the confusion matrix can be calculated at a given time according to these stored categories, for example at periodic intervals of times or at key moments, notably after a long period during which the architecture has not been used.

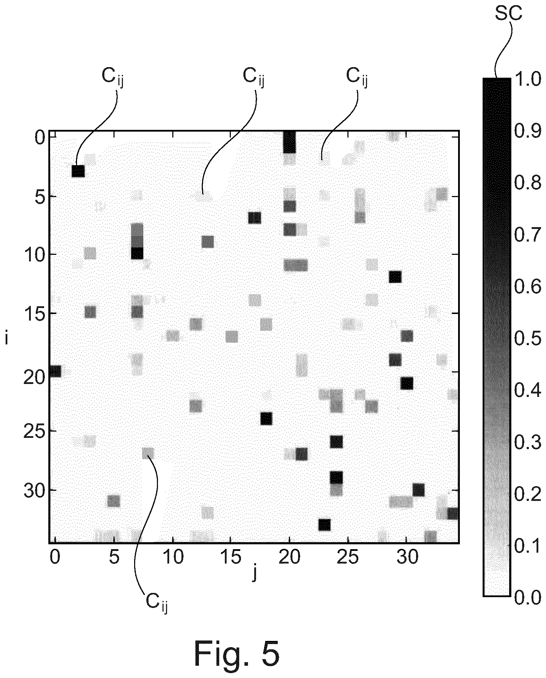

Figure 5 shows a representation of such a matrix, wherein the values of the cells $C_{i,j}$ are represented according to a colour scale SC represented on the right. Thus, the more a cell $C_{i,j}$ is dark, the more the corresponding categories i, j are confused by the DCNN network N1, N2.

In particular, the process can provide to calculate a confusion rate for each pair of categories (i, j), notably by summing together the rate of confusing images of category i as category j and the rate of confusing images of category j as category i and, based on this calculation, to rank all the possible pairwise elements E1, E2, and to drew a similarity graph.

Advantageously, the process can provide for studying the behavior of the DCNN network N1, N2, especially by means of a Class Activation Mapping (CAM) function, in order to try to localize discriminative features, for example image regions, used by said DCNN network for achieving the category prediction task, and then to find out to which visual spatial properties said DCNN network is particularly interested in. To do so, the architecture can comprise means for performing such a behavior study.

Indeed, research work in visualizing the features that a DCNN network learns in the process of training is also important, in terms of understanding why said DCNN network performs good and how it can be improved. To do so, the article "Visualizing and Understanding Convolutional Networks" mentioned above introduced a technique to visualize the activity within the network, helping to identify problems and so obtain better results.

More specifically, the article "Learning Deep Features for Discriminative Localization" (B. ZHOU, A. KHOSLA, A. LAPEDRIZA, A. OLIVA, A. TORRALBA) describes how Class Activation Mapping (CAM) technique allows to highlight the discriminative regions to a specific class, notably by basing on the feature maps $F_5$, $F_k$ of the last convolution layer $C_5$, $C_k$. Indeed, CNN networks retain remarkable abilities to localize objects in the convolution layers $C_1$-$C_5$, $C_k$ until the final fully-connected layer FC, which increases the potential to identify the discriminative feature in a single forward pass process.

In particular, to implement such a CAM function, it is advantageous to provide the DCNN network N1, N2 with a Global Average Pooling (GAP) layer between the last convolution layer $C_5$ and the fully-connected layer FC. Indeed, the GAP layer could retain model space recognition ability of the DCNN network N1, N2 to identify the discriminative features of the image I.

The CAM function provides for calculating, for the $n_5$, $n_k$ features feature maps $F_5$, $F_k$ provided by the

last convolution layer $C_5$, $C_k$ and the category CA, CA' predicted by the fully-connected layer FC, a class map $M_{CA}$ according to the following formula:

$$M_{CA}(x, y) = \Sigma(k)k^* \omega_{CA}^* F_k(x, y)$$

wherein x, y are spatial grids and $\omega_{CA}$ the weight of the predicted category CA furnished by the fully-connected layer FC, so as to identify the features of the images of an element which are detected in priority by the DCNN network for predicting the category of said element.

In particular, the size of the obtained class map $M_{CA}$ may be the same as that of the feature maps $F_5$, $F_k$ at the output of the last convolution layer $C_5$, $C_k$, such as, in the above mentioned case, with a size of 11x11. Thus, there is just a need to upsample this class map $M_{CA}$ to 227x227, and composite to the original input image I. Finally, it would be possible to identify the regions of the image I that are most relevant to predict the category CA, CA', and then to further understand the visual spatial features that the DCNN network N1, N2 is most interested in.

Moreover, the CAM technique gives better results when the fifth convolution layer $C_5$ provides 200 feature maps $F_5$, $F_k$ with highlighted important image features $f_1$-$f_5$, $f_k$, notably with image segmentation techniques as stated before.

Generally speaking, concerning the particular case of space recognition, the scenes vary in a large range, even in a same zone. Unlike images for object recognition, which depict objects from different angles of view, space recognition task does not rely on single object level recognition, as explained in further details in the article "Recognizing Indoor Scenes" (A. QUATTONI, A. TORRALBA, IEEE Conference on Computer Vision and Pattern Recognition, 2009). The common ground for a segment of space consists of global spatial features and high-level visual features, which are more like style and pattern of spatial properties.

Such an architecture can be implemented into an electronic platform available for the public, for example through an online access, so as to allow users to upload images I to identify outdoor spaces, places, cities, and so on.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Architecture adapted for recognising a category (CA, CA') of an element (E1, E2) from at least one image (I, I1, I2) of said element, said architecture comprising:

   - at least one Deep Convolutional Neural Network (DCNN) (N, N1, N2) comprising at least:

     o k consecutive convolution layers ($C_k$, $C_1$-$C_5$) (k being a natural number at least equal to 1), each of said convolution layers being adapted to detect at least a feature ($f_k$) in an image (I, I1, I2) of the element (E1, E2), and comprising each a number $n_k$ of kernels that are each adapted to filter said a least one feature ($f_k$) in said image, the first convolution layer ($C_1$) being adapted to filter an input image (I, I1, I2) of said element for producing $n_1$ feature maps ($F_1$) representing spatial locations of its corresponding feature ($f_1$) in said input image, the following convolution layers ($C_2$-$C_k$) being adapted to filter output feature maps ($F_1$-$F_{k-1}$) of the preceding convolution layer ($C_1$-$C_{k-1}$) for producing n2-nk feature maps ($F_2$-$F_k$) representing spatial locations of their corresponding feature ($f_2$-$f_k$) in said output feature maps;
     ○ a fully-connected layer (FC) comprising means for predicting a possible category (CA, CA') of the element (E1, E2) from the $n_k$, $n_5$ output feature maps ($F_k$, $F_5$) of the last convolution layer ($C_k$, $C_5$);

   - at least one Support Vector Machine (SVM) (V) comprising means for processing the $n_k$, $n_5$ output feature maps ($F_k$, $F_5$) of the last convolution layer ($C_k$, $C_5$) to classify said feature maps, and means to furnish said classified feature maps to the fully-connected layer (FC), so as to improve the accuracy of the prediction of the possible category (CA, CA') with a lower computational complexity;
   - means for comparing the predicted possible category (CA, CA') with the real category of the element (E1, E2);
   - means for establishing, from the results of said comparison, a confusion matrix for recapitulating the confusions of categories made by the DCNN network (N, N1, N2), so as to evaluate the pairs of categories (CA, CA') that are most often confused by said DCNN network.

2. Architecture according to claim 1, **characterized in that** the DCNN network (N, N1, N2) comprises at least three Multilayer Perceptron (MLP) convolution layers ($C_1$-$C_3$).

3. Architecture according to claim 2, **characterized in that** the DCNN network (N, N1, N2) comprises at least five convolution layers ($C_1$-$C_5$), the three first ones of said convolution layers being Multilayer Perceptron (MLP) convolution layers ($C_1$-$C_3$).

4. Architecture according to any one of claims 1 to 3, **characterized in that** the last convolution layer ($C_k$, $C_5$) is adapted to filter the $n_4$, $n_{k-1}$ output feature maps ($F_4$, $F_{k-1}$) of the preceding convolution layer ($C_4$, $C_{k-1}$) for producing 200 feature maps ($F_k$, $F_5$) highlighting the most important features ($f_k$, $f_1$-$f_5$) of the image (I, I1, I2).

5. Architecture according to any one of claims 1 to 4, **characterized in that** the DCNN network (N, N1, N2) comprises at least one pooling layer (P1-P4) inserted at the output of a convolution layer ($C_1$-$C_5$, $C_k$) for managing the dimensions of the output feature maps ($F_1$-$F_5$, $F_k$) of said convolution layer to avoid overfitting of the consecutive layer ($F_2$-$F_5$, FC).

6. Architecture according to claim 5, **characterized in that** the DCNN network (N, N1, N2) comprises a pooling layer (P4) which is inserted between the last convolution layer (C5) and the fully-connected layer (FC) and which is arranged to perform a Global Average Pooling (GAP) procedure on feature maps ($F_5$) provided by the last convolution layer (C5) to avoid overfitting of the fully-connected layer (FC).

7. Architecture according to any one of claims 1 to 6, **characterized in that** the fully-connected layer (FC) is implemented with a m-way softmax function comprising m predetermined possible categories (CA1, CA2, CA3, CA4) (m being a natural number at least equal to 2), as well as with means for attributing a score to each of the m predetermined categories (CA1, CA2, CA3, CA4), and means for predicting a possible category (CA, CA') for an element (E1, E2) upon selection of the predetermined category (CA1, CA2, CA3, CA4) with the highest score.

8. Architecture according to any one of claims 1 to 7, **characterized in that** the DCNN network (N, N1, N2) implements a dropout function for randomly deactivating a part of the kernels (KE) of at least one layer ($C_1$-$C_5$, $C_k$, FC), so as to reduce the risks of overfitting for said DCNN network.

9. Architecture according to any one of claims 1 to 8, **characterized in that** the SVM machine (V) comprises means for implementing a radial kernel to process the $n_5$, $n_k$ output feature maps ($F_k$, $F_5$) of the last convolution layer ($C_5$, $C_k$).

10. Architecture according to any one of claims 1 to 9, **characterized in that** it comprises means for previously training the DCNN network (N, N1, N2) to recognize the categories (CA, CA') of several elements (E1, E2), said means being adapted to provide to said DCNN network a video file (M1, M2) comprising images (I1, I2) of said elements (E1, E2).

11. Architecture according to any one of claims 1 to 10, **characterized in that** the image (I, I1, I2) comprises a first element (E1) and a second element (E2) which is a part of said first element, said architecture being adapted to recognize the category (CA') of the second element (E2) by means of:

   - a first DCNN network (N1) for predicting a possible first category (CA) for the first element (E1);
   - a second DCNN network (N2), for predicting a possible second category (CA') for the second element (E2), the second category (CA') corresponding to a sub-category of the first category (CA);

   the first DCNN network (N1) being adapted to communicate the predicted first category (CA) to the second DCNN network (N2) and the second DCNN network (N2) being adapted to use said predicted first category to predict the second category (CA').

12. Architecture according to claims 10 and 11, **characterized in that** the training means are adapted to train the first (N1) and second (N2) DCNN networks in parallel to recognize respectively categories (CA) of a first group of elements (E1) and categories (CA') of a second group of elements (E2) that are each a part of an element (E1) from the first group, said means being adapted to provide in parallel to said first DCNN network (N1) a first video file (M1) comprising images of the first group of elements (E1), and to said second DCNN network (N2) a second video file (M2) comprising images of said second group of elements (E2).

13. Architecture according to any one of claims 1 to 12, **characterized in that** it comprises means for previously estimating and saving the real category of the element (E1, E2), the comparing means being adapted to compare the predicted category (CA, CA') with said estimated and saved real category.

14. Architecture according to any one of claims 1 to 13, characterized it that the means for establishing the confusion matrix are adapted to calculate each cell $C_{i,j}$ of said matrix according to the following formula:

$$C_{i,j}=n_{i,j}/n_j$$

wherein $n_{i,j}$ is the number of images with real category j for which a category i was wrongly predicted and $n_j$ is the total number of images (I) with said real category j that was processed by the DCNN network (N, N1, N2)

15. Architecture according to any one of claims 1 to 14, **characterized in that** it comprises means for studying the behavior of the DCNN network (N, N1, N2) by means of a Class Activation Mapping (CAM) function, which provides for calculating, from the $n_k$, $n_5$ feature maps ($F_k$, $F_5$) provided by the last convolution layer ($C_k$, $C_5$) and the categories (CA, CA') predicted by the fully-connected layer (FC), a class map $M_{CA}$ according to the following formula:

$$M_{CA}(x, y)=\Sigma(k)k^*\omega_{CA}^*F_k(x, y)$$

wherein x,y are spatial grids and $\omega_{CA}$ the weight of the predicted category (CA, CA') furnished by the fully-connected layer (FC), so as to identify the features ($f_k$) of the images (I) of an element (E1, E2) which are detected in priority by the DCNN network (N, N1, N2) for predicting the category (CA, CA') of said element.

Fig. 1

Fig. 2a

Fig. 2b

(a)        (b)

Fig. 3

Fig. 4

Fig. 5

Europäisches
Patentamt

European
Patent Office

Office européen
des brevets

# EUROPEAN SEARCH REPORT

Application Number

EP 17 15 2333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Fan Zhang ET AL: "Indoor Space Recognition using Deep Convolutional Neural Network: A Case Study at MIT Campus", arXiv (Cornell University Library), 7 October 2016 (2016-10-07), XP055374046, Retrieved from the Internet: URL:https://arxiv.org/ftp/arxiv/papers/1610/1610.02414.pdf [retrieved on 2017-05-18] * abstract * * section 2.1; figure 2 * * section 4.2 * * section 5.1; figure 10 * | 1-15 | INV. G06K9/46 G06K9/62 |
| Y | DI-XIU XUE ET AL: "CNN-SVM for Microvascular Morphological Type Recognition with Data Augmentation", JOURNAL OF MEDICAL AND BIOLOGICAL ENGINEERING - ZHONGHUA YIXUEGONGCHENG XUEKAN, vol. 36, no. 6, 1 December 2016 (2016-12-01), pages 755-764, XP055374118, TW ISSN: 1609-0985, DOI: 10.1007/s40846-016-0182-4 * section 1, third paragraph * * section 3; figure 4 * * section 4.3; table 4 * * section 5 * | 1-15 | |

TECHNICAL FIELDS
SEARCHED (IPC)

G06K

The present search report has been drawn up for all claims

| Place of search | Date of completion of the search | Examiner |
|---|---|---|
| The Hague | 18 May 2017 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NEWCOMBE RA ; LOVEGROVE SJ ; DAVIDSON AJ.** DTAM: Dense Tracking And Mapping in real-time. *International Conference on Computer Vision,* 2011
- **JAKOB E ; THOMAS S ; DANIEL C.** LSD-SLAM: Large-Scale Direct Monocular SLAM. Lecture Notes in Computer Science, 2014, 834-849
- **M. CUMMINGS ; P. NEWMAN.** FAB-MAP: Probabilistic Localization and Mapping in the Space of Appearance. *The International Journal Of Robotics Research,* June 2008, 647-665
- **T-Y LIN ; S. BELONGIE ; J. HAYS.** Cross-View Image Geolocalization. *IEEE Conference on Computer Vision and Pattern Recognition (CVPR),* 2013
- **J. DONAHUE ; Y. JIA ; O. VINYALS ; J. HOFFMAN ; N. ZHANG ; E. TZENG ; T. DARRELL.** A Deep Convolutional Activation Feature for Generic Visual Recognition. *Proceedings of the 31st International Conference on Machine Learning,* 2014, 647-655
- **M. OQUAB ; L. BOTTOU ; I. LAPTEV ; J. SIVIC.** Learning and Transferring Mid-Level Image Representations Using Convolutional Neural Networks. *IEEE Conference on Computer Vision and Pattern Recognition,* 2014
- **S. R. KHERADPISHEH ; M. GHODRATI ; M. GANJTABESH ; T. MASQUELIER.** *Deep Networks Can Resemble Human Feed-Forward Vision in Invariant Object Recognition,* 2016
- **A. KRIZHEVSKY ; I. SUTSKEVER ; GE. HINTON.** ImageNet Classification with Deep Convolutional Neural Networks. *Advances in Neural Information Processing Systems,* 2012, vol. 25, 1097-1105
- **M. ZEILER ; R. FERGUS.** *Visualizing and Understanding Convolutional Networks,* 2013
- **DK KIM ; T CHEN.** Deep Neural Network for Real-Time Autonomous Indoor Navigation. Cornell University, November 2015
- **W CHEN ; C WEI ; Q TING ; Z YIMIN ; W KAIJAN ; W GANG.** Door Recognition and Deep Learning Algorithm for Visual Based Robot Navigation. *IEEE International Conference on Robotics and Biomimetics (ROBIO),* 2014
- **A KENDALL ; M GRIMES ; R CIPOLLA.** PoseNet: A Convolutional Network for Real-Time 6-DOF Camera Relocalization. *IEEE International Conference on Computer Vision (ICCV),* 2015
- **N SUNDERHAUF ; F DAYOUB ; S SHIRAZI ; B UPCROFT ; M MILFORD.** On the Performance of ConvNet Features for Place Recognition. *IEEE/RSJ International Conference on Intelligent Robots and Systems (IROS),* 2015
- **S. LYU ; E.P. SIMONCELLI.** Nonlinear Image Representation Using Divisive Normalization. *IEEE Conference on Computer Vision and Pattern Recognition,* 24 June 2008
- **G. E. HINTON ; N. SRIVASTAVA ; A. KRIZHEVSKY ; I. SUTSKEVER ; R. SALAKHUTDINOV.** *Improving Neural Networks by Preventing Co-Adaptation of Feature Detectors,* 2012
- **B. ZHOU ; A. KHOSLA ; A. LAPEDRIZA ; A. OLIVA ; A. TORRALBA.** *Learning Deep Features for Discriminative Localization*
- **A. QUATTONI ; A. TORRALBA.** Recognizing Indoor Scenes. *IEEE Conference on Computer Vision and Pattern Recognition,* 2009